# EUROPEAN PATENT APPLICATION

(11) **EP 4 083 514 A1**
(43) Date of publication of application: **02.11.2022**
(21) Application number: 21170832.6
(22) Date of filing: 28.04.2021
(51) Int. Cl.: F24C 15/00, F24C 15/32

(54) **STEAM COOKING APPARATUS**

(71) Applicant: Koninklijke Philips N.V., 5656 AG Eindhoven (NL)
(72) Inventor: SCHRETTLINGER, Joachim, 5656 AE Eindhoven (NL); MURBACHER, Werner Karl, 5656 AE Eindhoven (NL); SCHRATTER, Bernhard, 5656 AE Eindhoven (NL)
(74) Representative: de Vries, Janna

(57) **Abstract**

A steam cooking apparatus has a user interface area in front of a cooking chamber, and a heating chamber and a cooling chamber behind the cooking chamber. A fan arrangement comprises a circulation fan for providing the circulation of heated air in the cooking chamber and a cooling fan. The cooling fan expels cooling air which follows a path which leads to the user interface chamber and leads from the user interface chamber to an exit port in the base. The path includes a channel arrangement in the base.

## Description

### FIELD OF THE INVENTION

This invention relates to a steam cooking apparatus, also referred to as a steam cooker or a steamer.

### BACKGROUND OF THE INVENTION

Steam cooking (also referred to as steaming) is commonly known as one of the healthiest cooking methods. In particular, steam cooking is often preferred over other cooking methods such as boiling, frying and baking because it results in a lower amount of nutrient destruction.

This is because steam cooking generally operates at a lower temperature, typically below 100 degrees Celsius, but nevertheless enables short cooking times due to the wet steam environment. The presence of water as the cooking medium causes a leaching out of water soluble nutrients when boiling, and this is greatly reduced by steam cooking.

A traditional steamer comprises a pan for placing over the hob of a cooker, in which water is boiled. Food to be steamed is mounted over the pan in trays having perforated bases.

Steam cookers are now well known which comprise a steam cooking chamber around which hot air and steam are circulated by a fan. The steam cooker is for example a top-loaded device, rather than a more conventional steam oven with a front door.

Steam is introduced into the cooking chamber, either from an external steam source or else generated internally within the cooking chamber for example by using a vaporizer at the bottom of the cooking chamber. A heating chamber adjacent to the cooking chamber comprises a fan and a heater to generate a circulatory flow of hot air and steam. The steam generation may take place in the heating chamber instead of in the cooking chamber.

The heating chamber is a closed unit next to the main cooking chamber, but it has at least one opening for air intake from the cooking chamber and at least one opening for air delivery into the cooking chamber.

The steam cooker has a user interface at which a user can enter operating commands. Most conveniently, this user interface is at a front of the steam cooker. For the best user experience, the user interface is on top of the cooker, since the user will typically be looking down onto the cooker from above, as it is typically freestanding on a kitchen worktop. The steam cooker for example has a top surface having a user interface at the front, an inspection area to the cooking chamber in the middle where the food can be inspected, and the heating chamber at the back, away from the user. This provides convenience as well as safety to the user. The user can adjust cooking parameters and watch the cooking process without reaching across hot areas.

The user interface is however next to the cooking chamber and it therefore risks being heating by the heat from the cooking chamber. This may make the user interface uncomfortable for the user.

### SUMMARY OF THE INVENTION

The invention is defined by the claims.

According to examples in accordance with an aspect of the invention, there is provided a steam cooking apparatus, comprising:
a cooking chamber over a base;
a user interface area in front of the cooking chamber, the user interface area being provided over a user interface chamber which houses user interface circuitry;
a steam generator for providing steam to the cooking chamber;
a heating chamber behind the cooking chamber;
a heating arrangement located within the heating chamber for heating air for circulation around the cooking chamber;
a cooling chamber behind the heating chamber having an external air entry port;
a fan arrangement, comprising a circulation fan for providing the circulation of heated air and a cooling fan,
wherein the cooling fan is adapted to expel cooling air which follows a path which leads to the user interface chamber and leads from the user interface chamber to an exit port in the base, wherein the path includes a channel arrangement in the base.

The cooling fan is used to draw air over components that need cooling, such as a fan motor, and they are within the cooling chamber. This cools those components. The cooling air is also used to cool the user interface chamber at the opposite side of the cooking apparatus (i.e. the front rather than the back). This cools the circuitry associated with the user interface as well as cooling the surface of the apparatus in the vicinity of the user interface area. Thus, an existing air flow, which would normally simply be expelled, e.g. from the base of the apparatus, is used to perform an additional cooling function.

As the user interface is at the front of the device, the user does not need to reach across the heated lid to use the apparatus. A touch area to open the lid is for example also provided is at the front side, next to the user interface. The exit port is not visible in normal use and it prevents the exiting air being directed to a user.

The cooling fan is for example adapted to expel cooling air from the cooling chamber to a rear of the base, and the base comprises a channel arrangement for routing the expelled cooling air from the cooling chamber to the front of the base and to the user interface chamber.

Thus, in this example, the path leads from the cooling chamber, along the channel arrangement of the base to the user interface chamber, and then from the user interface chamber to the exit port.

The channel arrangement for example extends around the exit port. Thus, the cooling air passes around the exit port to reach the front of the apparatus, and it reaches the exit port only after passing through the user interface chamber.

The apparatus in this example may comprise an air flow passageway from the user interface chamber to the outside of the cooking chamber, wherein a passageway is provided leading from the outside of the cooking chamber to the exit port.

In another example, the cooling fan is adapted to expel cooling air from the cooling chamber to the outside of the cooking chamber and to the user interface chamber, and the channel arrangement of the base is for routing the expelled cooling air from the user interface chamber to the exit port.

Thus, in this example, the path leads from the cooling chamber, around the cooking chamber to the user interface chamber, and then along the channel arrangement of the base to the exit port.

The apparatus may further comprise a bottom cover, and the channel arrangement is defined between a lower surface of the base and the bottom cover. Thus, the channel arrangement is simply defined by the surface shapes of two already required parts (a base and a bottom cover of the overall apparatus.

The circulation fan is for example in the heating chamber and the cooling fan and a motor for the circulation fan and the cooling fan are in the cooling chamber.

The apparatus for example comprises a top-load lid over the cooking chamber. The user can preferably inspect the cooking chamber through the lid, and opening the lid does not disrupt access to the user interface area, which is in front.

The external air entry port is for example in a rear wall of the apparatus. This means it is hidden from view in normal use.

A separation wall may be provided between the cooling chamber and the heating chamber through which a fan drive shaft extends. Thus, they are separate chambers, with thermal isolation between them.

The apparatus may further comprise a vent arrangement between the cooking chamber and the heating chamber to allow a circulatory flow of air between the heating chamber and the cooking chamber.

Thus, there is a circulatory flow around the heating chamber and the cooking chamber through the two vents.

The cooking chamber for example comprises a base, a rear wall area and a front wall area, wherein the vent arrangement comprises an extraction vent in the rear wall area through which air is drawn from inside the cooking chamber, and a delivery vent in the rear wall area for delivering air to the cooking chamber.

The extraction vent is for example located in a middle region of the rear wall area and this may lead directly to the circulation fan, and the delivery vent is located at a top region of the rear wall area above the extraction vent.

By providing the delivery vent at the top of the rear wall area, above the extraction vent, a circulatory flow is generated which passes along a top of the cooking chamber (i.e. under a lid of the apparatus). In this way, the lid is heated with a continuous flow, thereby reducing condensation on the lid to prevent steaming up of the viewing window formed by the transparent lid. This flow is between the top of the food support and the underside of the lid, and this space provides additional control of the low conditions near the lid.

The cooking apparatus preferably comprises a transparent lid which is inclined downwardly from the rear wall area towards the front wall area.

The term "transparent lid" should be understood as meaning the whole lid if it is entirely transparent, or just the transparent portion if the lid has a transparent window and a significant non-transparent frame. The transparent lid enables inspection of the food during cooking.

By inclining the lid downwardly from the rear wall area towards the front wall area, the design prevents condensation of steam at the transparent section of the lid via heating. The transparent lid is preferably openable and is thus used both for inserting and removing food and for inspection during cooking.

The apparatus preferably further comprises:
a water reservoir; and
a delivery system for delivering water from the water reservoir to the steam generator.

This provides the generation of steam. A controller is for example provided, which is adapted to control the steam generator to heat water from the water reservoir to create steam. A water dosing system is preferably also provided for delivering water to the heating arrangement.

A continuous or pulsed delivery of water and a cyclic control of the heating arrangement may for example be used to maintain a cooking temperature in a desired range. A feed arrangement is for example provided to feed water from the water reservoir into contact with a heated surface of the steam generator. This surface is then used to induce evaporation.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a known cooking apparatus;
Figure 2 shows the cooking chamber opened up to show the rear wall area and the first and second side wall areas to show one example of vent arrangement;
Figure 3 shows the general layout of the lid, cooking chamber, heating chamber and user interface region for a design in accordance with the invention;
Figure 4 shows a first example of possible cooling air flow paths;
Figure 5 shows the underside of the cooking apparatus with the bottom cover removed;
Figure 6 shows the underside of the cooking apparatus with the bottom cover applied;
Figure 7 shows the cooking chamber; and
Figure 8 shows a second example of possible cooling air flow paths.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a steam cooking apparatus having a user interface area in front of a cooking chamber, and a heating chamber and a cooling chamber behind the cooking chamber. A fan arrangement comprises a circulation fan for providing the circulation of heated air in the cooking chamber and a cooling fan. The cooling fan expels cooling air which follows a path which leads to the user interface chamber and leads from the user interface chamber to an exit port in the base. The path includes a channel arrangement in the base.

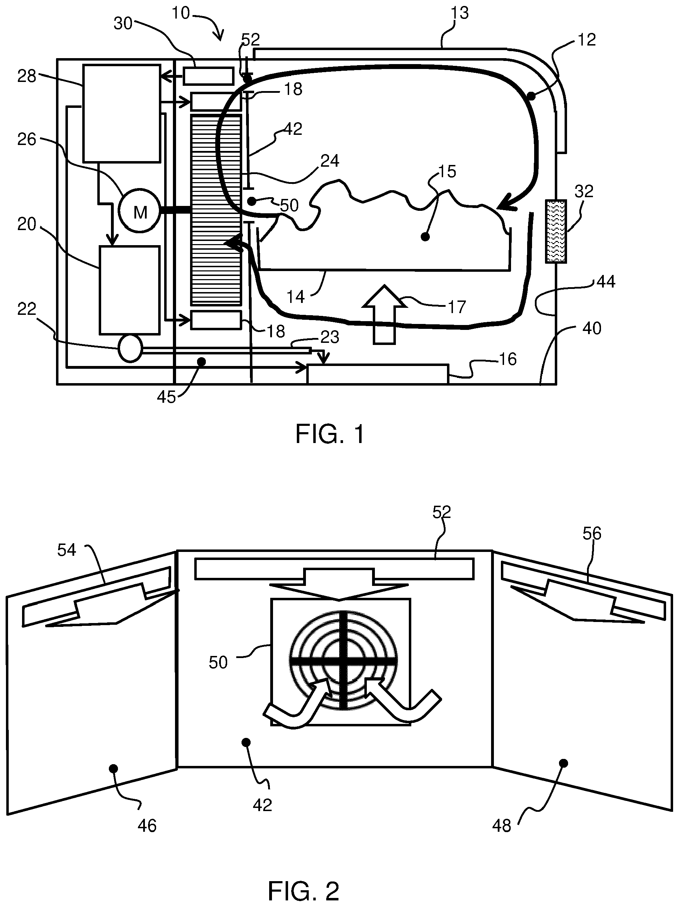

Figure 1 shows a known cooking apparatus 10, in particular as disclosed in WO 2020/148187. It is used to show the general type of cooking apparatus to which the invention may be applied.

The cooking apparatus comprises a cooking chamber 12 (i.e. a food chamber in which food to be cooked is placed) in which a food basket 14 is mounted. The cooking chamber has a viewing window 13 which may also be the openable lid of the apparatus. Food 15 to be cooked is placed on the food basket which then places the food near the center of the cooking chamber. The food basket has air permeable side walls and optionally an air permeable base so that air and steam can circulate through the basket to the food.

There is a heating arrangement which in this example comprises a first heater 16 for generating steam (a "steam generator") and a second heater 18 for heating air laden with steam. The first heater is used to generate steam (shown as arrow 17) from water which is delivered from a water reservoir 20 by a dosing system 22. The dosing system provides water to a feed arrangement 23 which delivers water to a surface of the first heater 16 to generate steam.

The dosing system may deliver a constant flow of water during cooking or a regularly pulsed delivery of water (so needing no feedback control), but it could also be controlled dynamically during cooking using feedback from a humidity sensor.

A circulation system is provided in the form of a circulation fan 24 and motor 26. The circulation system circulates the steam generated by the first heater 16 around the cooking chamber. The second heater 18 is along the circulation path and thereby further heats the steam to create a high temperature dry steam environment. The circulation system thus moves the saturated air inside the chamber to the food to increase convection and also assists in producing a homogeneous temperature field of all parts inside the cooking chamber, including the viewing window. This is to avoid condensation.

The apparatus is controlled by a controller 28, which controls the heating arrangement 16, 18 and optionally also the dosing system 22. The controller receives temperature information from a temperature sensor 30. The temperature of interest is the temperature at the center of the cooking chamber, where the food is located. However, the temperature sensor, which may be a negative temperature coefficient (NTC) temperature sensor, may be located anywhere in the cooking chamber, with a known correlation between the temperature at the sensor location and the temperature in the middle of the chamber.

The temperature is for example regulated by switching on and off the second heater 18 of the heating arrangement by the controller. The temperature of the first heater, for steam generation, is regulated by a thermostat again by cycling on and off. These two control mechanisms may be independent.

The cooking chamber is vented to the ambient surroundings by vents 32. Thus, the cooking chamber remains at substantially atmospheric pressure during use.

The controller 28 controls the heating arrangement to heat water from the water reservoir to create steam using the first heater 16, and to further heat the steam to create heated steam at a temperature around 100 degrees.

The second heater may further heat the steam for example to 120 degrees Celsius, or in the range 110 to 120 degrees Celsius. This approach is explained in WO 2020/0099339. Higher temperatures up to 200 degrees Celsius could be considered as well.

The circulation system circulates the heated steam around the cooking chamber. The vent or vents of the cooking chamber maintain the pressure at ambient pressure, and thus steam can escape when the maximum possible absolute humidity is reached (for the particular operating temperature), which would otherwise result in an increase in pressure.

The release mechanism provided by the vent or vents means that the steam delivery rate does not need to be controlled, and instead there can be a preset water delivery rate to the first heater 16. The controller may for example implement a control sequence which determines particular points of time when steam generation starts and/or ends. By way of example, a time-delayed start may be used for steam generation. The device is for example in a waiting mode for certain time e.g. 2 minutes from the start or else waiting until the cooking chamber temperature reaches 100 degrees Celsius. Water is then added to the first water heater 16. This pre-heating improves the avoidance of condensation at the window of the transparent lid. The device could also have an operation mode without any steam generation.

The cooking chamber 12 comprises a base 40, a rear wall area 42, first and second opposing side wall areas and a front wall area 44. These together define a closed chamber. The rear wall area 42 defines a separation wall which separates the cooking chamber 12 from a heating chamber 45 in which (at least) the fan blades of the circulation fan 24 and second heater 18 are housed. In the example shown, the motor 26, water reservoir 20, dosing system 22, and controller 28 are in a further chamber which is isolated from the heating chamber (i.e. there is no gas or liquid passage between them). However, there may be different components in the different chambers.

Figure 2 shows the cooking chamber opened up to show the rear wall area and the first and second side wall areas 46, 48 to show one example of vent arrangement.

The circulation system draws air out of the cooking chamber through an extraction vent 50 in the rear wall area. This vent leads to the fan blades.

A delivery vent arrangement for delivering air (and steam) comprises a first delivery vent 52 at a top region of the rear wall area above the extraction vent 50. It may extend across at least half of the width of the rear wall area, such as across more than 60%, 70% or 80% of that width.

In this example, a second delivery vent 54 is at a top region of the first side wall area 46 and a third delivery vent 56 is at a top region of the second side wall area 48.

In this known design, these vents are the only entry points for air/steam driven by the circulation system. Thus, it is possible through design of the vents and fan to control the circulation of air and steam within the cooking chamber in a reliable and repeatable way.

Note that the term wall "area" is used because the shape (from above) may not be a polygon, but instead may be a more curved shaped thus not having precisely defined sides, front and back. However, the shape (from above) is generally square or rectangular, so that corresponding front, back and sides may be readily identified. However, this does not imply that other shapes are not possible. Even a circle may be considered to have sides, a front and back by dividing it into quadrants.

The arrangement of vents shown enable a flow of the delivered air to pass over the full area of the underside of the lid 13. The viewing window area of the lid 13 has increased heat losses compared to an insulated wall so it is desirable for the window to be exposed to the flow created by the circulation system to maintain the viewing window above the dew point.

To the extent described above, the steam cooking apparatus is as described in WO 2020/148187.

Figures 1 and 2 do not show the user interface area at which a user provides control commands. The invention relates to a design in which the front of the apparatus has a user interface area, such as an external user interface panel, and/or switches and/or control knobs. There is also internal user interface circuity associated with the user interface controls.

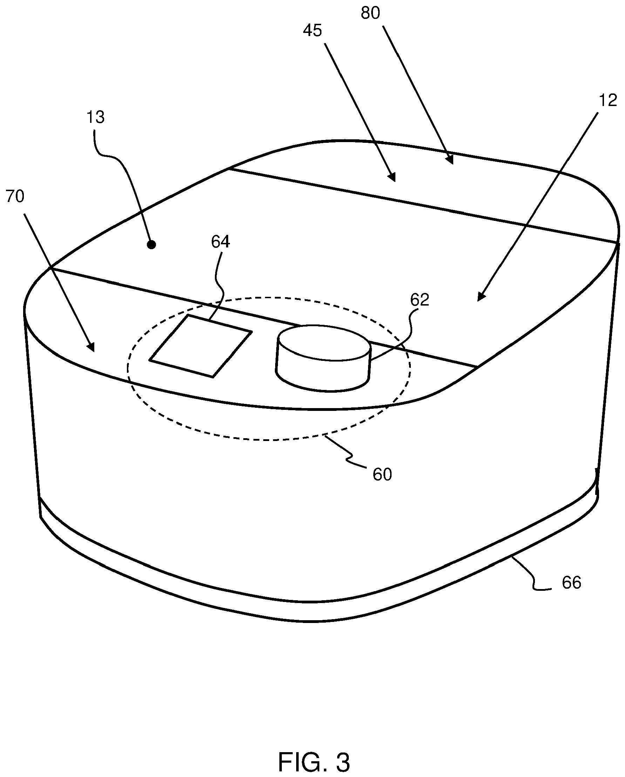

Figure 3 shows the general layout of the steam cooking apparatus of the invention.

The steam cooking apparatus comprises a cooking chamber 12 covered by a lid 13. A user interface area 60 is in front of the cooking chamber. The user interface area has external control input devices, such as a control knob 62 and control panel 64. The user interface area 60 is provided over a user interface chamber 70 internally of the steam cooker apparatus, which houses user interface circuitry.

The front of the cooking apparatus is the side closest to the user when the user is operating the cooking apparatus, and the back is the side furthest from the user.

As in the example of Figures 1 and 2, a heating chamber 45 is behind the cooking chamber in which a heating arrangement is provided for heating air for circulation around the cooking chamber 12. The cooking chamber sits on a base 66 of the apparatus.

The design in accordance with the invention also includes a cooling chamber 80 behind the heating chamber 45, in which a cooling fan is located. It has an external air entry port at the back wall. The primary function of the cooling fan is to draw air over the fan motor, which is housed in the cooling chamber.

The invention relates to the use of the cooling air flow delivered by the cooling fan.

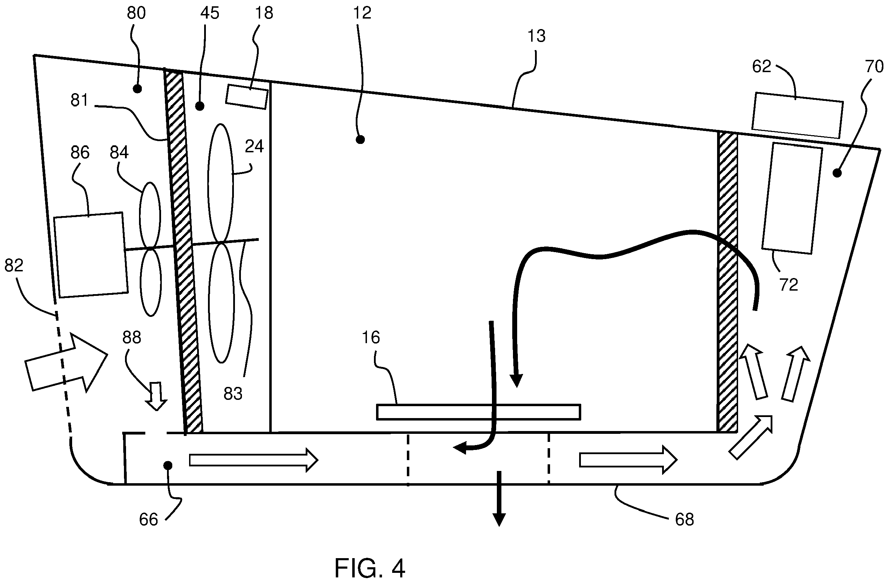

Figure 4 shows a first example of possible cooling air flow paths. The external air entry port 82 leads to the cooling chamber 80 where the cooling fan 84 is situated, as well as the motor 86 which drives both the cooling fan 84 and the circulation fan 24. A thermally insulating separation wall 81 divides the cooling chamber 80 and the heating chamber 45 and a fan drive shaft 83 extends across the separation wall 81.

The fan arrangement, as described above, includes the fan blades of the circulation fan 24 for providing the circulation of heated air and it also includes cooling fan blades within the cooling chamber.

The cooling fan 84 draws cooling air over the motor, as well as other components of the drive circuitry which are intended to be cooled.

The cooling fan expels cooling air from the cooling chamber 80 to a rear of the base 66 as shown by arrow 88. The base comprises a channel arrangement for routing the expelled cooling air from the cooling chamber 80 to the front of the base and to the user interface chamber 70.

The cooling air is thus used, in addition to providing motor cooling, to cool the user interface chamber 70 at the front of the cooking apparatus. This cools the user interface circuitry 72 as well as the surface of the apparatus in the vicinity of the user interface area 60. Thus, an existing air flow, which would normally simply be expelled, e.g. from the base of the apparatus, is used to perform an additional cooling function.

From the user interface chamber 70, the air is able to flow around the outside of the cooking chamber 12 (between the outside of the cooking chamber and the inside of an outer wall of the apparatus) and back down to the base 66, where it is then vented to the outside, as shown more clearly below. The cooking chamber has insulated outer walls to provide thermal isolation between the heated area inside the cooking chamber (and the heating chamber) and the areas outside the cooking chamber.

Thus, in this example, a path of the cooling air leads from the cooling chamber 80, along the channel arrangement of the base 66 to the user interface chamber 70, and then from the user interface chamber 70 to the external vent.

The channel arrangement is for example defined between the underside of the cooking chamber 12 and a bottom cover 68. Thus, the channel arrangement is simply defined by the surface shapes of two already required parts (the cooking chamber and a bottom cover of the overall apparatus).

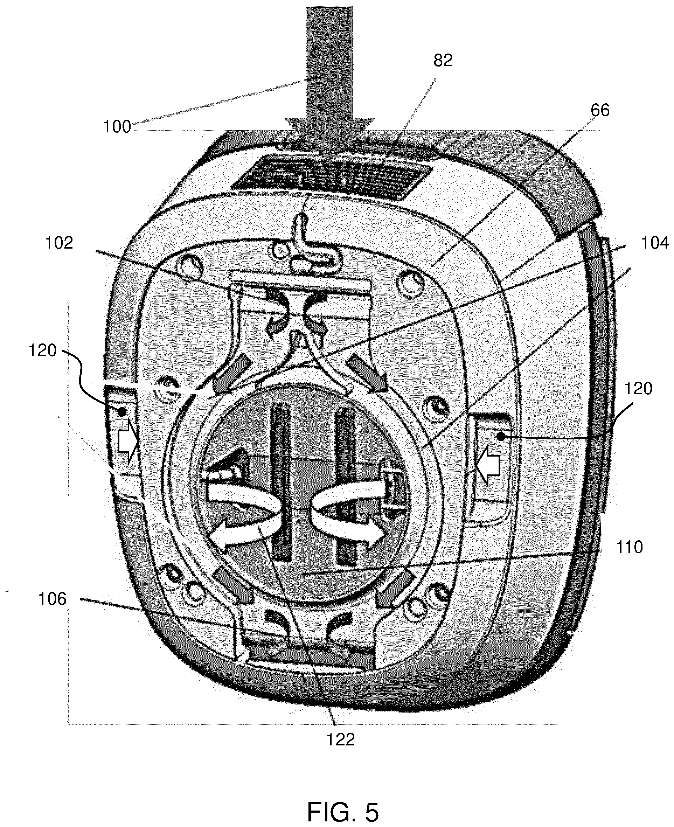

Figure 5 shows the underside of the cooking apparatus with the bottom cover removed.

Air enters the external air entry port 82 as shown by arrow 100. It is expelled by the cooling fan through a rear vent 102 at the back of the base, and it then enters the channel arrangement 104. The channel arrangement routes the flow to the front the base to a front vent 106, which leads to the user interface chamber 70.

The channel arrangement 104 extends around an exit port 110 for the cooling air which is in the base 66. Thus, the cooling air passes around the exit port 110 to reach the front of the apparatus. As explained below, the cooling air eventually reaches the exit port 110, and it reaches the exit port only after passing through the user interface chamber 70.

The airflow is distributed in the user interface chamber of the housing to provide cooling of the outer wall of the housing. Cooling channels are for example defined by the housing wall and the cooking chamber 12 comprises a thermally insulated outer layer. Various airflow directing means may be used to distribute air in a desired manner.

From the user interface chamber 70, the air is able to flow around the outside of the cooking chamber. From the outside of the cooking chamber, the air can flow to the base where it then escapes from the exit port 110 as shown by arrow 122.

The cooling air may flow freely from the user interface chamber through the space between the cooking chamber and outer housing to the exit port 110. In one possible design, lateral vents 120 may be used to provide a flow path from the outside of the cooking chamber to the exit port.

In either case, there is a passageway which leads from the outside of the cooking chamber 12 to the exit port 110.

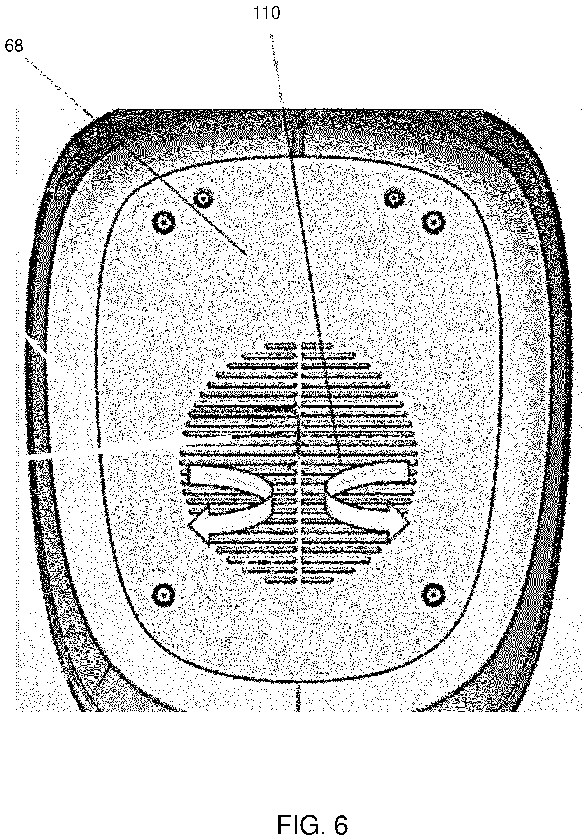

Figure 6 shows the underside of the cooking apparatus with the bottom cover 68 applied, in which the exit port 110 is formed as a grid. The bottom cover 68 closes the channel arrangement. As shown, the cooling air exits the exit port 110 after having flowed:
(i) past the motor in the cooling chamber;
(ii) along the channel arrangement in the base from the back to the front;
(iii) into the user interface chamber and around the user interface electronic components (which are for example mounted in a box to prevent shortcuts by condensation);
(iv) around the outside of the cooking chamber; and
(v) through the lateral vents towards the exit port.

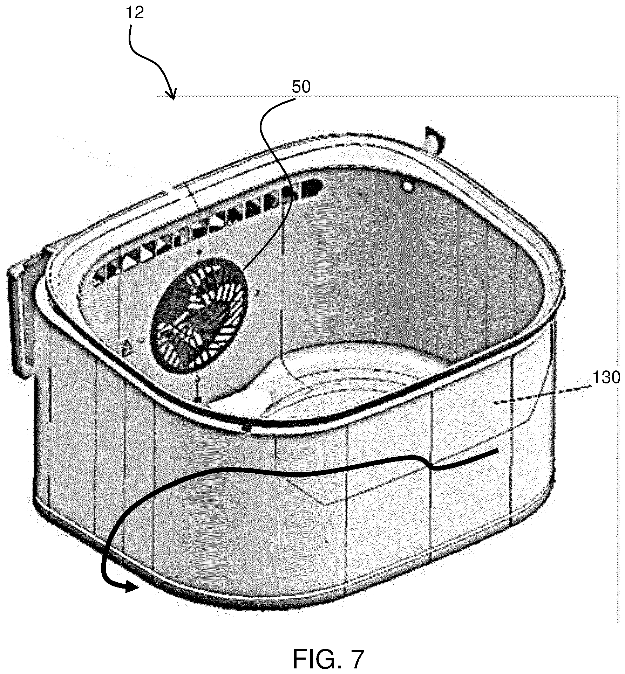

Figure 7 shows the cooking chamber 12 and shows the insulation 130 around the cooking chamber to isolate the user interface chamber from the cooking chamber, so that the user interface chamber can be cooled effectively.

The example above defines a path which leads from the cooling chamber, along the channel arrangement of the base to the user interface chamber, and then from the user interface chamber to the exit port.

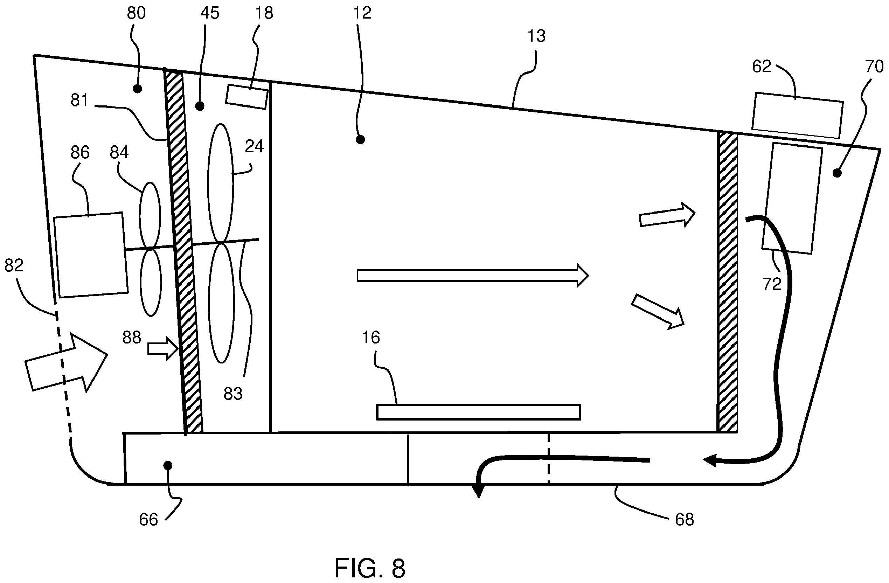

Figure 8 shows an alternative configuration in which a path is defined which leads from the cooling chamber to the outside of the cooking chamber and then to the user interface chamber. The channel arrangement of the base is then for routing the expelled cooling air from the user interface chamber to the exit port.

Thus, in this example, the path leads from the cooling chamber 80, around the cooking chamber 12 to the user interface chamber 70, and then along the channel arrangement of the base to the exit port.

In both examples, the cooling fan 84 expels cooling air which follows a path which leads to the user interface chamber 70 and leads from the user interface chamber to the exit port 110 in the base 66. The path includes a channel arrangement 104 in the base.

In the examples above, the steam generator is mounted at the bottom of the cooking chamber. However, the steam generator may be external to the cooking chamber and deliver steam to the cooking chamber.

As discussed above, embodiments make use of a controller. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor or controller.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A steam cooking apparatus (10), comprising:
a cooking chamber (12) over a base (66);
a user interface area (60) in front of the cooking chamber (12), the user interface area being provided over a user interface chamber (70) which houses user interface circuitry (72);
a steam generator (16) for providing steam to the cooking chamber (12);
a heating chamber (45) behind the cooking chamber;
a heating arrangement (18) located within the heating chamber (45) for heating air for circulation around the cooking chamber;
a cooling chamber (80) behind the heating chamber having an external air entry port (82);
a fan arrangement, comprising a circulation fan (24) for providing the circulation of heated air and a cooling fan (84),
wherein the cooling fan (84) is adapted to expel cooling air which follows a path which leads to the user interface chamber (70) and leads from the user interface chamber to an exit port (110) in the base (66), wherein the path includes a channel arrangement (104) in the base.

2. The apparatus of claim 1, wherein the cooling fan (84) is adapted to expel cooling air from the cooling chamber (80) to a rear of the base (66), and the channel arrangement (104) of the base is for routing the expelled cooling air from the cooling chamber (80) to the front of the base (66) and to the user interface chamber (70).

3. The apparatus of claim 1 or 2, wherein the channel arrangement (104) extends around the exit port (110).

4. The apparatus of anyone of claims 1 to 3, comprising an air flow passageway from the user interface chamber (70) to the outside of the cooking chamber (12), wherein a passageway is provided leading from the outside of the cooking chamber (12) to the exit port (110).

5. The apparatus of anyone of claims 1 to 4, wherein the cooling fan (84) is adapted to expel cooling air from the cooling chamber (80) to the outside of the cooking chamber and to the user interface chamber, and the channel arrangement (104) of the base is for routing the expelled cooling air from the user interface chamber to the exit port (110).

6. The apparatus of any one of claims 1 to 5, comprising a bottom cover (68), wherein the channel arrangement (104) is defined between a lower surface of the base (66) and the bottom cover.

7. The apparatus of any one of claims 1 to 6, wherein the circulation fan (24) is in the heating chamber (45) and the cooling fan (84) and a motor (86) for the circulation fan and the cooling fan are in the cooling chamber (80).

8. The apparatus of any one of claims 1 to 7, comprising a top-load lid (13) over the cooking chamber (12).

9. The apparatus of any one of claims 1 to 8, wherein the external air entry port (82) is in a rear wall of the apparatus.

10. The apparatus of any one of claims 1 to 9, comprising a separation wall (81) between the cooling chamber (80) and the heating chamber (45) through which a fan drive shaft (83) extends.

11. The apparatus of any one of claims 1 to 10, further comprising a vent arrangement (50,52,54,56) between the cooking chamber (12) and the heating chamber (45) to allow a circulatory flow of air between the heating chamber and the cooking chamber.

12. The apparatus of claim 11, wherein the cooking chamber (12) comprises a base (40), a rear wall area (42) and a front wall area (44), wherein the vent arrangement comprises an extraction vent (50) in the rear wall area through which air is drawn from inside the cooking chamber, and a delivery vent (52) in the rear wall area for delivering air to the cooking chamber.

13. The apparatus of any one of claims 1 to 12, further comprising:
a water reservoir; and
a delivery system for delivering water from the water reservoir to the steam generator.
